# EUROPEAN PATENT APPLICATION

(11) **EP 3 858 609 A1**
(43) Date of publication of application: **04.08.2021**
(21) Application number: 19864536.8
(22) Date of filing: 30.08.2019
(51) Int. Cl.: B32B 27/20, B65D 65/02

(54) **LIQUID-REPELLENT FILM**

(30) Priority: 27.09.2018 JP 2018182148
(71) Applicant: Daiwa Can Company, Tokyo 100-7009 (JP)
(72) Inventor: SHIRATORI Seimei, Kawasaki-shi, Kanagawa 212-0032 (JP); FUJIMOTO Koji, Kawasaki-shi, Kanagawa 212-0032 (JP); HOTTA Yoshio, Kawasaki-shi, Kanagawa 212-0032 (JP); MATUKAWA Yosihiko, Sagamihara-shi, Kanagawa 252-5183 (JP); KANAMORI Shinichirou, Sagamihara-shi, Kanagawa 252-5183 (JP); HASHIMOTO Kana, Sagamihara-shi, Kanagawa 252-5183 (JP); KIDO Atsushi, Osaka-shi, Osaka 534-0027 (JP); KOBAYASHI Mitsunobu, Osaka-shi, Osaka 534-0027 (JP)
(74) Representative: Henkel & Partner mbB
(86) International application number: PCT/JP2019/034290
(87) International publication number: WO 2020/066464

(57) **Abstract**

The present invention is a liquid-repellent film that exhibits an excellent liquid repellency, and a packaging material of which a surface is formed of the same. The liquid-repellent film comprises:
an undercoat part (90) formed unevenly on the substrate surface by microparticles (70) and a thermoplastic resin (80); and
a topcoat part (60) having: (i) a minute uneven structured part that includes hydrophilic microparticles (20) having a smaller particle size than the microparticles (70); (ii) a liquid-repellent moiety (40) that bonds to the surface of the minute uneven structured part; and (iii) a binder resin (50) that is present between the surface of the undercoat part (90) and the minute uneven structured part, and is distributed to cover the bonding part of the minute uneven structured part and the liquid-repellent moiety (20).

## Description

### RELATED APPLICATIONS

This application claims the priority of Japanese Patent Application No. 2018-182148 filed on September 27, 2018, the disclosure of which is incorporated herein by reference in its entirety.

### FIELD OF THE INVENTION

The present invention relates to a liquid-repellent film having an improved durability.

### BACKGROUND OF THE INVENTION

Various functions are demanded for films or sheets for packaging daily necessities such as food products, pharmaceuticals, cosmetics, household essentials, or the like, and particularly those which contents such as highly viscous liquids, semi-solids, and gel substances hardly adhere to, and hardly remain on the part in contact are strongly demanded. When films or sheets for packaging materials that are poor in adhesion preventability are used for food products that contain creams of cakes, yoghurts, puddings, jellies, syrups, and sources for Japanese dumplings, for example, as their contents, they will be disposed in the state of adhering to/remaining on the films or sheets for packaging material; and problems of food waste, or problems of inhibiting promotion of recycling plastics arise. Moreover, when taking out the contents, there are also problems of dirtying hands, clothes, or other things nearby with the contents adhered to films or sheets for packaging. Furthermore, when films or sheets for packaging material are left with the remaining contents, various adverse effects such as occurrence of decay or odor, or gathering of insects may occur. The technique of reducing the amount of the contents adhering to films or sheets for packaging material as much as possible is very important.

In Patent Literature 1, for example, an invention of an oil-repellent coating is described, the oil-repellent coating comprising: a primary unevenness formed by microparticles having the particle size of 100 nm or greater on the surface of an article; a secondary unevenness formed by microparticles having the particle size of 7 to 90 nm; and an oil-repellent agent coated with the secondary unevenness.

### CITATION LIST

### PATENT LITERATURE

PATENT LITERATURE 1: Japanese Unexamined Patent Publication No. 2011-140625A

### DISCLOSURE OF THE INVENTION

### PROBLEM TO BE SOLVED BY THE INVENTION

However, in films formed with microparticles and oil-repellent agents like Patent literature 1, durability required for practical use needs to be improved. The object of the present invention is to provide a liquid-repellent (indicates both water-repellency and oil-repellency) film having an excellent durability, and a packaging material, a packaging container and an article using the same on the surface thereof.

### MEANS TO SOLVE THE PROBLEM

A liquid-repellent film according to one embodiment of the present invention is a liquid-repellent film formed on a substrate surface, and the liquid-repellent film comprises:
(i) a minute uneven structured part formed of hydrophilic microparticles;
(ii) a liquid-repellent moiety that bonds to the surface of the minute uneven structured part; and
(iii) a binder resin that is present between the substrate surface and the minute uneven structured part, and is distributed to cover the bonding part of the minute uneven structured part and the liquid-repellent moiety.

Moreover, a liquid-repellent film according to one embodiment of the present invention is a liquid-repellent film formed on a substrate surface, and the liquid-repellent film comprises:
(A) an undercoat part formed unevenly on the substrate surface by microparticles and a thermoplastic resin; and
(B) a topcoat part having: (i) a minute uneven structured part formed of hydrophilic microparticles having a smaller particle size than the microparticles; (ii) a liquid-repellent moiety that bonds to the surface of the minute uneven structured part; and (iii) a binder resin that is present between the surface of the undercoat part and the minute uneven structured part, and is distributed to cover the bonding part of the minute uneven structured part and the liquid-repellent moiety.

According to the liquid-repellent film configured as above, a liquid-repellent coating including: the minute uneven structured part formed by hydrophilic microparticles; the liquid-repellent moiety bonded to the surface thereof; and the binder resin that does not have the liquid-repellent moiety is formed on the substrate surface or the surface of the undercoat part formed unevenly, and liquid-repellency exhibited by the liquid-repellent moiety of the surface of the film is maintained. In particular, a minute uneven structure is formed at the surface of the film by numerous hydrophilic microparticles, and the numerous liquid-repellent moieties are oriented toward the outside on the surface of the uneven structure; therefore, the liquid-repellent moieties can exhibit an excellent liquid-repellency. In addition, the binder resin strongly fixes the minute uneven structure formed by the hydrophilic microparticles to the substrate surface or the surface of the undercoat part, and also strongly fixes the liquid-repellent moieties to the surface of the minute uneven structure. Accordingly, the liquid-repellent film having an improved durability can be provided.

When configuring the liquid-repellent film in a double-layered structure of the undercoat part and the topcoat part, the undercoat part comprises microparticles having a larger particle size than the hydrophilic microparticles of the topcoat part. Accordingly, a minute uneven structure by the hydrophilic microparticles of the topcoat part is formed on the surface of the uneven structure formed with microparticles having a relatively large particle size of the undercoat part, and a large uneven structure as a whole can be obtained. The minimum particle size of the microparticles of the undercoat part is preferably larger than the maximum particle size of the hydrophilic microparticles of the topcoat part. The uneven structure formed by both microparticles becomes an uneven structure with steep protrusions and recesses as a whole, and liquid-repellency increases more.

In the liquid-repellent film, the surface of the minute uneven structure formed by the hydrophilic microparticles may be in a state such that aggregated part of the liquid-repellent moieties and the exposed part (hydrophilic moiety) of the hydrophilic surface of the hydrophilic microparticle are distributed. Or, when the binder resin comprises the hydrophilic moiety, the surface of the minute uneven structure formed by the hydrophilic microparticles may be in a state such that the aggregated part of the liquid-repellent moieties and the aggregated part of the hydrophilic moieties comprised in the binder resin are distributed. These configurations enable to provide the liquid-repellent film particularly suitable for preventing adhesion of O/W emulsions. If the liquid-repellent moiety and the hydrophilic moiety are distributed alternately, for example, on the surface of the minute uneven structure, water of the continuous phase of the emulsion is attracted by the hydrophilic moiety thereof, and breakdown of the micelle in the emulsion by contacting with the liquid-repellent film can be prevented easily. Moreover, when the liquid-repellent film is pulled off from the O/W emulsion or when the O/W emulsion is removed from the liquid-repellent film, adhesion of the O/W emulsion is prevented by the liquid-repellent moieties distributed on the surface, so that the O/W emulsion hardly remains on the liquid-repellent film. In particular, even after the liquid-repellent film has been in contact with the O/W emulsion over a long time, preventability of adhesion of O/W emulsions can be exhibited.

When a cake-cream adhesion test was performed with the liquid-repellent film of one embodiment, it was confirmed that condensation of dew occurred on the surface that was in contact with the cake-cream.

In the liquid-repellent film, the hydrophilic microparticles may be hydrophilic silica microparticles, and the binder resin may be a vinyl-based resin. In particular, the binder resin may be a copolymer of vinyl chloride resin and vinyl acetate resin. By using the hydrophilic silica microparticles, a liquid-repellent film having a superior liquid-repellency than other hydrophilic oxide microparticles can be provided. Moreover, when both effects of durability exhibited by the binder resin and coating-performance are taken into consideration, a combination of the hydrophilic silica microparticles and the vinyl-based resin is preferred.

A packaging material according to one embodiment of the present invention is obtained by using the above-identified liquid-repellent film on the surface thereof. Moreover, a packaging container according to another embodiment of the present invention uses the above-identified liquid-repellent film as a lid material surface. The above-identified liquid-repellent film is used for forming surfaces of various articles such as films or sheets for pouches, films or sheets for packaging cakes, or the like.

### EFFECT OF THE INVENTION

According to the present invention, a liquid-repellent film having an excellent durability, and a packaging material, a packaging container, and an article using the same on the surfaces thereof can be provided.

### BRIEF DESCRIPTION OF DRAWINGS

FIG. 1 is a schematic cross-sectional view of a liquid-repellent film according to one embodiment.
FIG. 2 is a schematic cross-sectional view of a topcoat part of the above-identified liquid-repellent film.
FIG. 3 shows the results of a cream adhesion test of Example 6. (A) is a photograph of an unprocessed PET, (B) is a photograph of a liquid-repellent PET, and (C) is a photograph showing them together.
FIG. 4 (A) is an electron micrograph of the surface of the liquid-repellent film of Example 7, and (B) to (D) are images that show distribution of F-element, Si-element, and C-element.
FIG. 5 is 3500x, 10000x, 50000x, and 100000x electron micrographs of the surface of the liquid-repellent film of Example 10.
FIG. 6 is 3500x, 10000x, 50000x, and 100000x electron micrographs of the surface of the liquid-repellent film of Example 11.
FIG. 7 is a photograph that shows the results of a suspensibility and dispersibility test of the mixture of two components of the coating liquid.

### DESCRIPTION OF EMBODIMENTS

In the following, preferred embodiments of the present invention are described in detail with reference to the drawings.

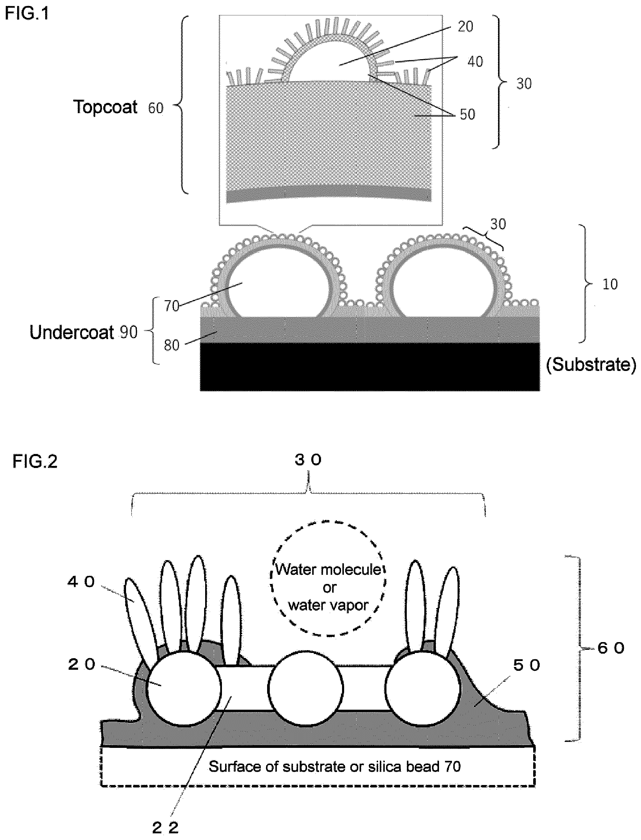

FIG. 1 is a schematic cross-sectional view of the liquid-repellent film according to one embodiment. As shown in FIG. 1, the liquid-repellent film comprises a substrate, and a liquid-repellent film 10 formed on at least one plane of this substrate.

The substrate is not particularly limited as long as it is an article that can be a support body, and it comprises at least one layer or more of a layer consisting of a film comprising a resin, paper, or a metal foil, for example. A resin film selected at least one from styrene-based resins, olefin-based resins, polyester-based resins, nylon-based resins, ethylene vinyl alcohol copolymers and acrylic resins is used as the film comprising the resin. When the substrate layer is multi-layered, the laminating method is not particularly limited, and a dry laminate method, a wet laminate method, a heat laminate method, or the like can be used. Moreover, the substrate layer may be processed with inorganic/metal-vapor deposition processing. The substrate layer may be processed with printings. The printing method is not particularly limited, and well-known methods such as gravure printing, flexographic printing, screen printing, or the like can be used.

The thickness of the substrate layer is not particularly limited. Thicknesses of about 1 to 200 µm as a film and about 200 to 10000 µm as a sheet are generally used.

The liquid-repellent film 10 has a double layered configuration of an undercoat 90 that forms a relatively large uneven structure, and a topcoat 60 that forms a minute uneven structure.

The undercoat 90 comprises of silica beads 70 as microparticles, and a resin composition 80 including a thermoplastic resin. Examples of the silica beads 70 include crystalline silica, and amorphous silica (dry silica, wet silica, silica gel, etc.); however, it is not particularly limited and those that are well-known can be used suitably. The shape of the silica beads 70 is not particularly limited, and various shapes such as a polyhedron, uneven shaped, or the like can be selected. Moreover, porous hydrophilic silica beads may be used.

The thermoplastic resin is not particularly limited, and examples including polyester, polyolefin, polystyrene, nylon, polyvinyl chloride, polyvinylidene chloride, polyvinyl alcohol, an acrylonitrile-butadiene-styrene copolymer, an ethylene-vinyl acetate copolymer, polyacetal, polymethyl methacrylate, a methacrylic-styrene copolymer, cellulose acetate, polyurethane, polycarbonate, or the like may be used.

The thickness of the resin composition 80 is not particularly limited; however, it is smaller than the particle size of the silica beads 70 to some extent. The silica bead 70 is not entirely buried in the resin composition 80, and a part of the silica bead 70 is exposed from the resin composition 80.

The undercoat 90 is formed by applying an undercoat coating liquid, of which the silica beads 70 and the resin composition 80 are dissolved to or dispersed in a solvent, on the substrate, and drying. The solvent is not particularly limited as long as it can dissolve or disperse the thermoplastic resin. Examples thereof include: hydrocarbons such as n-hexane, cyclohexane, toluene, benzene, xylene, etc.; ketones such as acetone, methyl ethyl ketone (MEK), etc.; alcohols; or the like.

The topcoat 60 is a layer comprising a minute uneven structure 30, a liquid-repellent moiety 40, and a binder resin 50, and is formed to cover the surface of the relatively large uneven structure of the undercoat 90. The minute uneven structure 30 is formed with numerous hydrophilic particles 20 that are connected like a rosary, and has a porous structure. This uneven structure 30 is strongly fixed to the surface of the undercoat 90 by the binder resin 50. Moreover, the liquid-repellent moiety 40 is bonded to the surface of the minute uneven structure 30. The bonding part thereof is covered with the binder resin 50, and the terminal of the liquid-repellent moiety 40 is oriented toward the outside.

The topcoat 60 is formed by applying a topcoat coating liquid, which is obtained by dissolving or dispersing: hydrophilic silica microparticles; zirconium alkoxide, titanium alkoxide, silicone alkoxide, etc. that are metal alkoxides; perfluoroalkylsilane (FAS) having a fluoro group that is the liquid-repellent moiety 40; a vinyl chloride-vinyl acetate copolymer as the binder resin 50; and a hydrochloric acid as water and a hydrolysis catalyst to a solvent, on the surface of the undercoat 90, and drying.

The hydrophilic microparticles 20 that form the minute uneven structure 30 are those in which the hydrophilic silica microparticles are connected to each other by metal alkoxides to form aggregates. For example, silicone alkoxide turns into silica (SiO₂) and remains inside the minute uneven structure. Although commercially available hydrophilic silica microparticles are used herein, the uneven structure may be formed with others such as titanium oxide, zinc oxide, aluminum oxide (alumina), etc.

Perfluoroalkylsilane (FAS) is covalently bonded to the surface of the minute uneven structure 30 of the hydrophilic microparticles 20 in a state such that, during the step of application, the reacting group part (Si) thereof bonds to the surface of the hydrophilic silica microparticle or the metal alkoxide, and the fluoro group that is the liquid-repellent moiety 40 is oriented toward the outside.

Perfluoroalkylsilane (FAS) is one which some of the alkyl groups of alkylsilane is substituted to fluorocarbon groups (perfluoro groups). Examples thereof include CF₃(CH₂)₂Si(OCH₃)₃, CF₃(CF₂)₅(CH2)₂Si(OCH₃)₃, CF₃(CF₂)₇(CH₂)₂Si(OCH₃)₃, CF₃(CF₂)₇(CH₂)₂SiCH₃(OCH₃)₂, CF₃(CF₂)₃(CH₂)₂Si(OCH₃)₃, CF₃(CF₂)₇(CH₂)₂SiCl₃. Among the above, heptadecafluorodecyltrimethoxysilane of C8, tridecafluorooctyltrimethoxysilane of C6, or nonafluorohexyltrimethoxysilane of C4 is preferred, and tridecafluorooctyltrimethoxysilane of C6 is more preferred in terms of safety and oil-repellency.

Although vinyl-based resins are used as the binder resin 50 herein, other resins may be used.

Upon preparing the topcoat coating liquid, the proportion of the binder resin is preferably about 1 to 50% when the solid component is 100%. When the proportion of the binder resin 50 is large, the minute uneven structure 30 will be buried in the binder resin 50, and it will affect liquid-repellency. Whereas, when the proportion of the binder resin 50 is small, it will affect fixing of the minute uneven structure 30 or the liquid-repellent moiety 40, and a sufficient durability may not be achieved. In the present embodiment, it is preferred that the surface of the minute uneven structure 30 is partially covered with the binder resin 50, and the hydrophilic surface of the hydrophilic microparticles 20 is partially exposed.

Regarding the particle size of the hydrophilic microparticles 20, the average primary particle size is preferably 5 to 100 nm. If the average primary particle size is within the above-identified range, the hydrophilic silica microparticles become suitably aggregated, and a porous minute uneven structure can be formed easily.

The thickness of the topcoat 60 is not particularly limited; however, it may be 0.1 to 3.0 µm.

The solvent used for preparing the topcoat coating liquid is not particularly limited as long as it can dissolve or disperse the solid components.

According to the liquid-repellent film of the present embodiment, the topcoat 60 comprising: the minute uneven structure 30 formed by the hydrophilic microparticles 20; the liquid-repellent moiety 40 bonded to the surface thereof; and the binder resin 50, is formed on the surface of the undercoat 90 that is formed unevenly, and liquid-repellency exhibited by the liquid-repellent moiety 40 is maintained. In particular, the minute uneven structure 30 is formed by numerous hydrophilic microparticles 20 on the surface of the topcoat 60, and numerous hydrophilic moieties 40 are oriented toward the outside on the surface of the uneven structure 30, so that the liquid-repellent moiety 40 can exhibit an excellent liquid-repellency. In addition, the binder resin 50 strongly fixes the minute uneven structure 30 formed by the hydrophilic microparticles 20 to the surface of the undercoat 90, and also strongly fixes the liquid-repellent moiety 40 to the surface of the minute uneven structure 30. Accordingly, the liquid-repellent film having an improved durability can be provided.

The undercoat 90 comprises silica beads 70 having a larger particle size than the hydrophilic particles 20 of the topcoat 60. Accordingly, the minute uneven structure 30 can be formed by the hydrophilic microparticles 20 of the topcoat 60 on the surface of the uneven structure formed by the silica beads 70 of the undercoat 90, and a large uneven structure as a whole can be obtained. The minimum particle size of the silica beads 70 may be larger than the maximum particle size of the hydrophilic microparticles 20. The uneven structure formed by both microparticles becomes an uneven structure with steep protrusions and recesses as a whole, and liquid repellency increases more.

As stated above, a liquid-repellent film having an improved durability can be obtained in the present embodiment, and packaging materials, packaging containers and articles using the liquid-repellent film on their surfaces can be provided.

The liquid-repellent film of the present embodiment is suitable for films or sheets for packaging materials of daily necessities. For example, the liquid-repellent film of the present embodiment can be used as packaging materials for pouches that contain food products, cosmetics, detergents, shampoos, conditioners, etc., or packaging materials for lid materials of food containers of yoghurts, puddings, jellies, etc. Moreover, the liquid-repellent film of the present embodiment can be used as packaging materials for cakes with creams, or packaging materials for food products with viscous sauces such as Japanese dumplings.

FIG. 2 shows a schematic cross-sectional view of the topcoat 60 of the liquid-repellent film of the present embodiment. Adhesion preventability to O/W emulsions such as a whipped cream is described with FIG. 2. In the cross-sectional structure of the topcoat 60, the binder resin 50 is present between the surface of the substrate or the silica beads 70 and the hydrophilic microparticles 20, and is distributed to cover the bonding parts of the hydrophilic microparticles 20 and the liquid-repellent moiety 40. The hydrophilic microparticles 20 are bonded to each other like a rosary by a silica 22 that derives from silicone alkoxide.

The liquid-repellent moiety 40 is oriented toward the outside from the relationship of its surface free energy under an air atmosphere. The liquid-repellent moieties 40 easily aggregate with each other, and, as shown in FIG. 2, aggregates of the liquid-repellent moieties 40 are distributed over the surface of the minute uneven structure 30 including the hydrophilic microparticles 20 in several places. On the other hand, in some places of the surface of the minute uneven structure 30, the hydrophilic surface of the hydrophilic microparticles 20 is exposed.

For example, when the liquid-repellent film is in contact with a whipped cream (O/W emulsion), the micelle (oil droplet) in a whipped cream 21 can keep a stable state. In the boundary between the topcoat 60 of the liquid-repellent film and the whipped cream, the hydrophilic surface (hydrophilic moiety) of the hydrophilic microparticle 20 attracts water (or water vapor) that is the continuous phase of the whipped cream, so that breakdown of the micelle in the whipped cream by contacting with the topcoat 60 can be prevented easily. Moreover, when the liquid-repellent film is pulled off from the whipped cream or the whipped cream is removed from the liquid-repellent film, adhesion of the whipped cream is prevented by the liquid-repellent moiety 40 distributed over the surface, so that the whipped cream hardly remains on the liquid-repellent film. In particular, even after the liquid-repellent film has been in contact with the whipped cream over a long time, adhesion preventability to the whipped cream is exhibited.

If the surface of the topcoat 60 of the liquid-repellent film of the present embodiment is covered only with the liquid-repellent moieties 40, the micelle having a higher affinity than water is more likely to be in contact with the liquid-repellent layer. In that case, the micelle breaks down, and adhesion preventability to the whipped cream is considered to deteriorate. Whereas, if the surface of the topcoat 60 is in a state such that the liquid-repellent moieties and the hydrophilic moieties are distributed alternately as shown in FIG. 2, the hydrophilic moieties attract water that is the continuous phase of the whipped cream, and the possibility of the micelle to be in contact with the liquid-repellent layer may be lowered. As a result, the liquid-repellent film having an excellent adhesion preventability to whipped creams can be obtained.

Or, a similar effect can be achieved when the biner resin 50 comprises the hydrophilic moiety, even the surface of the topcoat 60 is in a state such that the aggregated parts of the liquid-repellent moieties 40 and the aggregated parts of the hydrophilic moieties comprised to the binder resin 50 are distributed alternately.

### EXAMPLES

The present invention is described in further details with the following examples; however, the present invention is not limited to these examples. Table 1 is a formulation table of undercoat coating liquids used in the examples.

**[Table 1]**

| | Under 1 | Under 2 | Under 3 |
|---|---|---|---|
| Thermoplastic resin | Olefin-based resin 22% | Ethylene/vinyl acetate-based resin 25% | Olefin-based resin 25% |
| Microparticles | Silica beads 13% | Silica beads 15% | Silica beads 15% |
| Solvent | 65% | 60% | 60% |

Table 2 is a formulation table of topcoat coating liquids used in the examples. A copolymer resin of vinyl chloride and vinyl acetate (vinyl chloride-vinyl acetate copolymer) was used as the binder resin. Commercially available hydrophilic fumed silica microparticles having the average primary particle size of 40 nm were used as the hydrophilic microparticles. Tetraethyl orthosilicate (TEOS) was used as the metal alkoxide. Perfluoroalkylsilane (FAS) was used as the silane compound comprising the liquid-repellent moiety. Moreover, the necessary hydrolysis catalyst and solvent were used to formulate the topcoat coating liquids in accordance with Table 2.

**[Table 2]**

| | Top 1 | Top 2 | Top 3 | Top 4 |
|---|---|---|---|---|
| Binder resin | vinyl chloride-vinyl acetate copolymer 3% | vinyl chloride-vinyl acetate copolymer 4% | vinyl chloride-vinyl acetate copolymer 4% | 0% |
| Microparticles | Silica microparticles 7% | Silica microparticles 7% | Silica microparticles 7% | Silica microparticles 8% |
| Metal alkoxide | Tetraethyl orthosilicate 4% | Tetraethyl orthosilicate 5% | Tetraethyl orthosilicate 5% | Tetraethyl orthosilicate 5% |
| Liquid-repellent moiety | Perfluoroalkylsilane 3% | Perfluoroalkylsilane 1% | Perfluoroalkylsilane 0.5% | Perfluoroalkylsilane 3% |
| Hydrolysis catalyst | Hydrochloric acid 0.6% | Hydrochloric acid 0.3% | Hydrochloric acid 0.3% | Hydrochloric acid 0.6% |
| Solvent | 82.4% | 82.7% | 83.2% | 83.4% |

Table 3 shows the substrates, undercoats, topcoats, and application amounts used in each sample.

**[Table 3]**

| | Substrate (Thickness) | Undercoat | Topcoat | Application amount of Undercoat (g/m²) | Application amount of Topcoat (g/m²) |
|---|---|---|---|---|---|
| Example 1 | PET 12 µm | - | Top 1 | - | 1.1 |
| Example 2 | PET 12 µm | Under 1 | Top 1 | 0.6 | 1.0 |
| Example 3 | PET 12 µm | Under 2 | Top 1 | 0.6 | 1.1 |
| Example 4 | PET 12 µm | Under 3 | Top 1 | 0.6 | 1.1 |
| Example 5 | OPP 60 µm | Under 1 | Top 1 | 1.6 | 1.2 |
| Example 6 | PET 50 µm | Under 1 | Top 1 | 1.6 | 0.8 |
| Example 7 | PET 50 µm | Under 1 | Top 1 | 1.6 | 1.9 |
| Example 8 | PET 12 µm | Under 1 | Top 2 | 1.6 | 0.6 |
| Example 9 | PET 12 µm | Under 1 | Top 3 | 1.6 | 0.4 |
| Example 10 | PET 50 µm | Under 3 | Top 2 | 1.7 | 1.7 |
| Example 11 | PET 50 µm | Under 3 | Top 2 | 1.7 | 2.3 |
| Comparative example 1 | PET 12 µm | - | Top 4 | - | 1.2 |

### <Evaluation method>

The samples of Examples 1 to 11 and Comparative example 1 of Table 3 were tested by the following methods, and evaluated.
(1) Contact angle of water: 10 µL of pure water was put onto the liquid-repellent film, and the contact angle of water was measured with a contact angle meter CA-DT (manufactured by Kyowa Interface Science Co., Ltd.).
(2) Falling angle of water: 10 µL of pure water was put onto the liquid-repellent film, and the substrate was tilted to measure the inclination angle of the substrate when pure water slid.
(3) Contact angle of oil: 10 µL of oleic acid was put onto the liquid-repellent film, and the contact angle of oil was measured with a contact angle meter CA-DT (manufactured by Kyowa Interface Science Co., Ltd.).
(4) Adhesiveness: 12 mm of a scotch tape (Cellotape®, NICHIBAN Co., Ltd., CT-12) defined by JIS Z 1522:2009 was attached to the liquid-repellent film, and then the scotch tape was pulled off to measure whether the coating film was peeled off or not.

**[Table 4]**

| | Water | | Oleic acid | Adhesiveness | Reference |
|---|---|---|---|---|---|
| | Contact angle (degrees) | Falling angle (degrees) | Contact angle (degrees) | Tape peeling | |
| Example 1 | 150 | 15 | 128 | Not peeled | Cream adhesion test A (Table 6) |
| Example 2 | 156 | 5 | 144 | Not peeled | |
| Example 3 | 154 | 7 | 140 | Not peeled | |
| Example 4 | 156 | 5 | 143 | Not peeled | |
| Example 5 | 152 | 10 | 133 | Not peeled | |
| Example 6 | 150 | 12 | 133 | Not peeled | Cream adhesion test B FIG. 3 |
| Example 7 | 152 | 10 | 133 | Not peeled | FIG. 4 |
| Example 8 | 154 | 8 | 146 | Not peeled | Cream adhesion test C (Table 7) |
| Example 9 | 154 | 5 | 142 | Not peeled | |
| Example 10 | 150 | 25 | 121 | Not peeled | Cream adhesion test D (Table 8) |
| Example 11 | 152 | 10 | 136 | Not peeled | |
| Comparative example 1 | 152 | 5 | 133 | Entirely peeled | |

As shown in Table 4, although only the topcoat is formed on the substrate in Example 1, liquid-repellency above a certain level was achieved as follows:
the contact angle of water was 150 degrees;
the falling angle of water was 15 degrees; and
the contact angle of oil was 128 degrees.

Examples 2 to 7 were coated with the same topcoat as in Example 1; however, since they had the undercoats, liquid-repellency improved more than in Example 1 as follows:
the contact angles of water were 150 degrees or greater;
the falling angles of water were within 12 degrees; and
the contact angles of oil were 133 degrees or greater.

The addition amounts of the liquid-repellent moieties of the topcoat varied in Examples 8 to 11; however, liquid repellency did not largely deteriorate. Therefore, adhesion of cream was compared to an unprocessed film.

The films did not peel off by the scotch tape in Examples 1 to 11; however, the film was entirely peeled off by the scotch tape in Comparative example 1 that did not comprise the binder resin. Addition of binders was effective.

### <Cream adhesion test>

The samples of Table 3 were tested by the following methods, and evaluated.

Cream adhesion test (A): 3 g of a cream was placed onto an acrylic plate, and lidded with the samples (size: 60 mm x 60 mm) of Examples 1 to 4 to measure adhesion amounts after ten minutes. The measurement results are shown in Table 5.

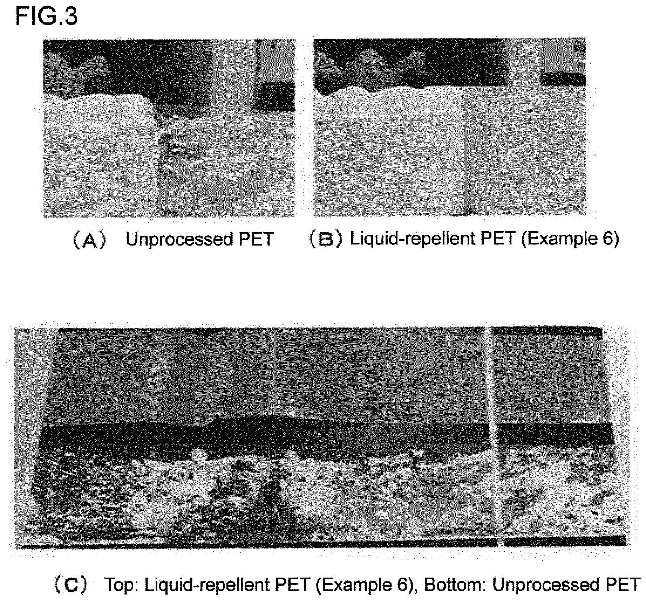

Cream adhesion test (B): The sample of Example 6 was used as a cake band to a commercially available sponge cake of size 4, and the adhesion amount of cream was compared to that of the unprocessed film. (Photographs of the test result are shown in FIG. 3.)

Cream adhesion test (C): A commercially available frozen whipped-cream sponge cake was defrosted at room temperature. The samples of Examples 8 and 9 (size: 55 mm x 70 mm) were attached to the circumference of the cake, and stored in a refrigerator for 72 hours to measure the adhesion amount. The measurement results are shown in Table 6.

Cream adhesion test (D): 3 g of a cream was placed onto an acrylic plate, and lidded with the samples (size: 60 mm x 60 mm) of Examples 10 to 11 to measure adhesion amounts after ten minutes. The measurement results are shown in Table 7.

The unprocessed substrate to which neither the undercoat nor the topcoat was coated was tested similarly. It was found that adhesion of cream to the sample was remarkably reduced in all cream adhesion tests by comparing with the unprocessed substrate.

**[Table 5]**

| | Cream adhesion test A (g/sample) | |
|---|---|---|
| | Vegetable-derived whipped cream | Animal-derived whipped cream |
| Example 1 | 0.019 | 0.118 |
| Example 2 | 0.001 | 0.049 |
| Example 3 | 0.001 | 0.089 |
| Example 4 | 0.001 | 0.017 |
| Unprocessed substrate | 0.104 | 0.276 |

**[Table 6]**

| | Cream adhesion test C (g/sample) |
|---|---|
| | Cake cream |
| Example 8 | 0.005 |
| Example 9 | 0.008 |
| Unprocessed substrate | 0.402 |

**[Table 7]**

| | Cream adhesion test D (g/sample) |
|---|---|
| | Animal-derived cream |
| Example 10 | 0.115 |
| Example 11 | 0.105 |
| Unprocessed substrate | 0.687 |

### <Surface observation>

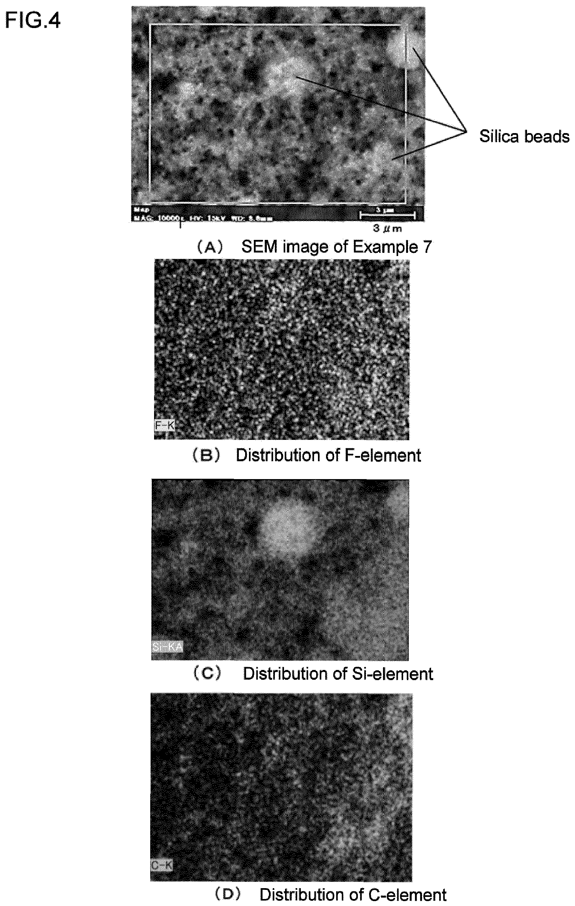

Next, FIG. 4 (A) is an electron micrograph (SEM image) of the liquid-repellent film of Example 7. FIG. 4 (B) to (D) are images that show distribution of F-element, Si-element, and C-element (elementary analysis by energy dispersive X-ray analysis (EDX)) inside the white frame of FIG. 4 (A). The bright parts in the SEM image of FIG. 4 (A) are the silica. The target elements are largely distributed to the bright parts in the distribution images of the elements of FIG. 4 (B) to (D).

In particular, FIG. 4 (B) shows that the liquid-repellent moieties (fluorine elements) are distributed almost averagely over the whole surface regardless of disposition of the silica beads. It is considered that such distribution of the liquid-repellent moieties is the reason of an excellent liquid-repellency.

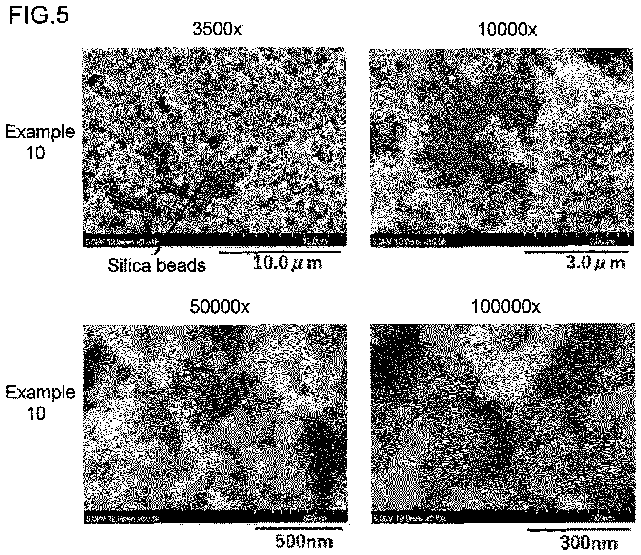

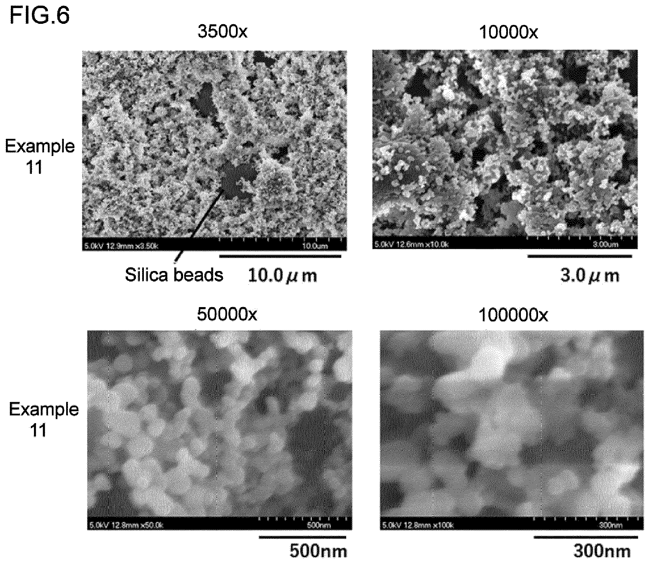

FIG. 5 and FIG. 6 show SEM images (3500x to 100,000x) of the liquid-repellent films of Examples 10 and 11. The 3500x image shows that most of the silica bead is covered with the topcoat. Moreover, it is the hydrophilic microparticles that cover the whole image, and the 50000x image shows that each hydrophilic particle has become the particle size of about 100 nm, and a porous uneven structure as a whole is formed.

### <Suspensibility and dispersibility test of the coating liquid>

Next, the coating liquids were prepared in accordance with the combinations of Table 8, and suspensibility and dispersibility were evaluated for the components of the topcoat coating liquid.

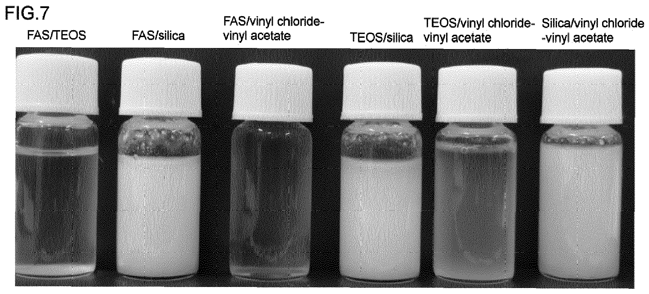

As shown in Table 8 and FIG. 7, separation in the coating liquid did not occur in any combination of components. Accordingly, it is found that the topcoat coating liquid can be prepared easily, and is excellent in coating performance.

Regarding suspensibility, white-clouding caused by the hydrophilic silica microparticles was observed in all coating liquids that comprise the hydrophilic silica microparticles. On the other hand, regarding the combinations of components that do not comprise the hydrophilic silica microparticles, the combinations of FAS/TEOS and FAS/vinyl chloride-vinyl acetate copolymer were transparent, and the combination of TEOS/vinyl chloride-vinyl acetate copolymer suspended. Therefore, since the combination of FAS/ vinyl chloride-vinyl acetate copolymer did not separate and was transparent, the two can be determined to have a certain affinity for the topcoat, and it is considered that the bonding part between FAS and the surface of the hydrophilic microparticle is covered with vinyl chloride-vinyl acetate copolymer, and FAS is strongly held by vinyl chloride-vinyl acetate copolymer.

As described above, the liquid-repellent moiety of which fluorine elements are averagely distributed over the whole surface, and is strongly held by vinyl chloride-vinyl acetate copolymer can be formed.

**[Table 8]**

| | Suspensibility | Dispersibility |
|---|---|---|
| FAS/TEOS | Transparent | No separation |
| FAS/Silica | Suspended | No separation |
| FAS/vinyl chloride-vinyl acetate copolymer | Transparent | No separation |
| TEOS/Silica | Suspended | No separation |
| TEOS/vinyl chloride-vinyl acetate copolymer | Suspended | No separation |
| Silica/vinyl chloride-vinyl acetate copolymer | Suspended | No separation |

### REFERENCE SIGNS LIST

10: Liquid-repellent film
20: Hydrophilic microparticle
30: Minute uneven structure
40: Liquid-repellent moiety
50: Binder resin
60: Topcoat
70: Silica bead
80: Resin composition comprising thermoplastic resin
90: Undercoat

## Claims

1. A liquid-repellent film formed on a substrate surface comprising:
(i) a minute uneven structured part formed of hydrophilic microparticles;
(ii) a liquid-repellent moiety that bonds to the surface of the minute uneven structured part; and
(iii) a binder resin that is present between the substrate surface and the minute uneven structured part, and is distributed to cover the bonding part of the minute uneven structured part and the liquid-repellent moiety.

2. A liquid-repellent film formed on a substrate surface comprising:
(A) an undercoat part formed unevenly on the substrate surface by microparticles and a thermoplastic resin; and
(B) a topcoat part having: (i) a minute uneven structured part formed of hydrophilic microparticles having a smaller particle size than the microparticles; (ii) a liquid-repellent moiety that bonds to the surface of the minute uneven structured part; and (iii) a binder resin that is present between the surface of the undercoat part and the minute uneven structured part, and is distributed to cover the bonding part of the minute uneven structured part and the liquid-repellent moiety.

3. The liquid-repellent film of claim 1 or 2, wherein an aggregated part of the liquid-repellent moieties and an exposed part of a hydrophilic surface of the hydrophilic microparticle are distributed on the surface of the minute uneven structure.

4. The liquid-repellent film of claim 1 or 2, wherein an aggregated part of the liquid-repellent moieties and an aggregated part of the hydrophilic moieties comprised to the binder resin are distributed on the surface of the minute uneven structure.

5. The liquid-repellent film of claim 3 or 4 that is suitable for preventing adhesion of an O/W emulsion.

6. The liquid-repellent film of any one of claims 1 to 5, wherein the hydrophilic microparticles are hydrophilic silica microparticles, and the binder resin is a vinyl-based resin.

7. The liquid-repellent film of claim 6, wherein the binder resin is a copolymer of vinyl chloride resin and vinyl acetate resin.

8. A packaging material having the liquid-repellent film of any one of claims 1 to 7 on the surface thereof.

9. A packaging container having the liquid-repellent film of any one of claims 1 to 7 on the surface of a lid material thereof.

10. An article having the liquid-repellent film of any one of claims 1 to 7 on the surface thereof.
